# EUROPEAN PATENT APPLICATION

(11) **EP 3 196 829 A1**
(43) Date of publication of application: **26.07.2017**
(21) Application number: 16845341.3
(22) Date of filing: 21.10.2016
(51) Int. Cl.: G06Q 40/02, G06Q 50/28, G06K 9/00, G01S 19/01, H04W 4/12, G06Q 20/38, G06F 21/36, G06F 3/0488

(54) **NON-FACING FINANCIAL SERVICE SYSTEM USING USER CONFIRMATION APPARATUS USING PARALLEL SIGNATURE PROCESSING, AND HANDWRITING SIGNATURE AUTHENTICATION TECHNIQUE**

(30) Priority: 23.10.2015 KR 20150006917 U; 28.12.2015 KR 20150187756
(71) Applicant: Finotek, Seocho-gu, Seoul 06754 (KR); Kim, Woo Sup, Seongnam-si, Gyeonggi-do 13540 (KR)
(72) Inventor: KIM, Woo Sup, Seongnam-si Gyeonggi-do 13540 (KR)
(74) Representative: Vossius & Partner Patentanwälte Rechtsanwälte mbB
(86) International application number: PCT/KR2016/011884
(87) International publication number: WO 2017/069553

(57) **Abstract**

An identification device using signature parallel processing and a non-face-to-face financial service system using an autographic signature authentication technique are provided. A non-face-to-face financial service system includes: an applicant terminal that receives an account opening request form, acquires a real name certificate image, registers an electronic signature to be used in a non-face-to-face financial transaction as an electronic signature for financial transaction, and registers an electronic signature to be used in receiving an access medium as an electronic signature for receipt; a deliverer terminal that outputs the real name certificate image and receive an acknowledgement signature for the access medium; and a financial service server that approves issuance of an account, transmits the real name certificate image to the deliverer terminal, and executes a designated measure depending on a type of the acknowledgement signature input to the deliverer terminal, when the account opening request form, the real name certificate image, the electronic signature for financial transaction, and the electronic signature for receipt are received from the applicant terminal.

## Description

### TECHNICAL FIELD

The present invention relates to an identification device using signature parallel processing and a non-face-to-face financial service system using an autographic signature authentication technique.

### BACKGROUND ART

Settlement using a credit card or a check card has been used more and more with boosting credit transactions. In general, a signature is put on a receipt to identify a user in the course of settlement. When existing POS terminals were used, a paper receipt had to be printed out and a signature had to be put on the receipt. Today, a signature is put on a screen connected to a POS terminal in a touch manner and thus the signature is printed out along with a receipt.

Face-to-face channels have occupied most financial transactions, but financial transactions using non-face-to-face channels have been used more and more with advancement of networks and popularization of smartphones. A signature is utilized for identification at the time of non-face-to-face financial transactions.

However, methods of verifying whether a signature in a credit transaction or a signature in a financial transaction is true are not satisfactory yet.

At present, non-face-to-face channels occupy about 90% of financial transactions such as loan, foreign exchange, bancassurance, and pension. However, a practice of financial companies' verifying a real name in a "face-to-face" manner at the time of opening an account continues and there has been a continuously raised problem in terms of improvement in consumer convenience. A financial account management method using an existing non-face-to-face channel is disclosed in Korea Patent Application Laid-open No. 10-2009-0040793.

In order to solve this problem, the Financial Services Commission proposed a "non-face-to-face" plan by a "rationalization plan of real name verification in opening an account," on May 18, 2015.

As for verification of a real name certificate at the time of issuance of an access medium (such as a bankbook, a credit card, a check card, or an OTP device, etc.), in accordance with the Electronic Financial Transaction Act, authoritative interpretation has changed from face-to-face verification to further include non-face-to-face verification. In this regard, institutional improvements are expected. Accordingly, technical developments are necessary in preparation therefor.

### SUMMARY OF INVENTION

### Technical Problem

The present invention provides an identification device using signature parallel processing that can reduce a computing time by setting a relatively low similarity criterion for each comparison item and can still secure sufficient reliability of identification by authenticating a signature only when a pass determination is made with respect to all the comparison items.

The present invention provides a non-face-to-face financial service system using an autographic signature authentication technique that can allow a client to utilize a financial service such as account opening without actually visiting a store, to thereby improve customer satisfaction for the financial service.

The present invention provides a non-face-to-face financial service system using an autographic signature authentication technique that can allow a non-face-to-face account opening applicant, in an emergency situation of being threatened, to alert the threat without causing a threatener to recognize.

Other objects of the invention will be easily understood from the following description.

### Solution to Problem

According to an aspect of the present invention, there is provided a non-face-to-face financial service system comprising: an applicant terminal for receiving an account opening request form, acquiring a real name certificate image, registering an electronic signature to be used in a non-face-to-face financial transaction as an electronic signature for financial transaction, and registering an electronic signature to be used in receiving an access medium as an electronic signature for receipt; a deliverer terminal for outputting the real name certificate image and receiving an acknowledgement signature for the access medium; and a financial service server for, when the account opening request form, the real name certificate image, the electronic signature for financial transaction, and the electronic signature for receipt are received from the applicant terminal, approving issuance of an account, transmitting the real name certificate image to the deliverer terminal, and executing a predetermined measure depending on a type of the acknowledgement signature input to the deliverer terminal.

The financial service server may include: a communication unit configured to communicate with the applicant terminal and the deliverer terminal; an account issuance approving unit configured, when the account opening request form, the real name certificate image, the electronic signature for financial transaction, and the electronic signature for receipt are received from the applicant terminal, to approve issuance of an account and allow delivery of the access medium; an electronic signature confirming unit configured to confirm the acknowledgement signature; an account utilization permitting unit configured to, if the acknowledgement signature is the electronic signature for receipt, permit utilization of the issued account for a future non-face-to-face financial transaction using said electronic signature for financial transaction; and an emergency procedure executing unit configured to, if the acknowledgement signature is the electronic signature for financial transaction, execute a predetermined emergency procedure.

The emergency procedure executing unit may consider a position of the deliverer terminal indicated by GPS information or a receipt address of the access medium as a position of the applicant and may transmit an emergency message along with the position of the applicant to a predetermined manager terminal.

According to another aspect of the present invention, there is provided an identification device including: a signature input unit configured to receive an input of an identification signature via a touch screen panel; a storage unit configured to store a reference signature; a comparison unit configured to determine a similarity between the identification signature and the reference signature with regard to respective ones of a plurality of predetermined comparison items; and a truth determining unit configured to determine that the identification signature is the same as the reference signature only when the comparison unit makes a pass determination with regard to all of the plurality of comparison items.

The comparison unit may include one or more of: a flow comparison module configured to compare a flow of a line included in a signature with directivity of a motion of a touch tool at the time of inputting the signature; a form comparison module configured to segment the input signature into strokes and to perform comparison of a moving distance of a stroke at an end point of the stroke; a touch comparison module configured to perform comparison in one or more of a touch frequency and a touch position of the touch tool with the touch screen panel at the time of inputting the signature; an acceleration/velocity comparison module configured to perform comparison in an instantaneous velocity of the touch tool in a predetermined time section at the time of inputting the signature; a horizontal size comparison module configured to perform comparison in a horizontal size of a whole image between the reference signature and the identification signature; a vertical size comparison module configured to perform comparison in a vertical size of a whole image between the reference signature and the identification signature; a ratio comparison module configured to perform comparison in a ratio between a horizontal size and a vertical size of a whole image between the reference signature and the identification signature; a pressure comparison module configured to perform comparison in a user's touch pressure which is measured while the signature is input to the signature input unit; and a coordinate comparison module configured to perform comparison in a position information error of coordinates based on the flow of a line.

The comparison unit may make a pass or a non-pass determination depending on whether or not the result from each comparison item is beyond a predetermined similarity level, and the truth determining unit may, if there is any one non-pass determination, determine that the signature authentication fails.

Other aspects, features, and advantages of the invention will become apparent from the accompanying drawings, the appended claims, and the detailed description of the invention.

### Advantageous Effects of Invention

According to the aspects of the present invention, it is possible to reduce a computing time by setting a relatively low similarity criterion for each comparison item and to secure sufficient reliability of identification by authenticating a signature only when a pass determination is made with respect to all the comparison items.

It is also possible to allow a client to utilize a financial service such as account opening without actually visiting a store, and to thereby improve customer satisfaction for the financial service.

It is also possible to allow a non-face-to-face account opening applicant, in an emergency situation of being threatened, to alert the threat without causing a threatener to recognize.

### BRIEF DESCRIPTION OF DRAWINGS

FIG. 1 is a diagram schematically illustrating a configuration of a non-face-to-face financial service system according to an embodiment of the invention.
FIG. 2 is a block diagram illustrating a configuration of an applicant terminal which is included in the non-face-to-face financial service system.
FIG. 3 is a flowchart illustrating a mobile non-face-to-face account opening method which is performed by the applicant terminal.
FIG. 4 is a block diagram illustrating a configuration of a financial service server which is included in the financial service system.
FIG. 5 is a block diagram illustrating a configuration of a deliverer terminal which is included in the financial service system.
FIG. 6 is a flowchart illustrating an account issuing and access medium delivering method which are performed in cooperation by the financial service server and the deliverer terminal.
FIG. 7 is a diagram schematically illustrating a configuration of an identification device using signature parallel processing according to another embodiment of the invention.
FIG. 8 is a diagram illustrating a configuration of comparison modules which are included in a comparison unit.
FIG. 9 is a diagram illustrating an example of comparison items and determination results.
FIG. 10 is a flowchart illustrating an identification method using the identification device according to the embodiment of the invention.

### DESCRIPTION OF EMBODIMENTS

The invention can be modified in various forms and specific embodiments will be described below and illustrated. However, the embodiments are not intended to limit the invention, but it should be understood that the invention includes all modifications, equivalents, and replacements belonging to the concept and the technical scope of the invention.

If it is mentioned that an element is "connected to" or "coupled to" another element, it should be understood that still another element may be interposed therebetween, as well as that the element may be connected or coupled directly to another element. On the contrary, if it is mentioned that an element is "connected directly to" or "coupled directly to" another element, it should be understood that still another element is not interposed therebetween.

Terms "first," "second," and the like can be used to describe various elements, but the elements should not be limited to the terms. The terms are used only to distinguish an element from another.

The terms used in the following description are intended to merely describe specific embodiments, but not intended to limit the invention. An expression of the singular number includes an expression of the plural number, so long as it is clearly read differently. The terms such as "include" and "have" are intended to indicate that features, numbers, steps, operations, elements, components, or combinations thereof used in the following description exist and it should thus be understood that the possibility of existence or addition of one or more other different features, numbers, steps, operations, elements, components, or combinations thereof is not excluded.

Elements of an embodiment described below with reference to the accompanying drawings are not limited to the corresponding embodiment, may be included in another embodiment without departing from the technical spirit of the invention. Although particular description is not made, plural embodiments may be embodied as one embodiment.

In describing the invention with reference to the accompanying drawings, like elements are referenced by like reference numerals or signs regardless of the drawing numbers and description thereof is not repeated. If it is determined that detailed description of known techniques involved in the invention makes the gist of the invention obscure, the detailed description thereof will not be made.

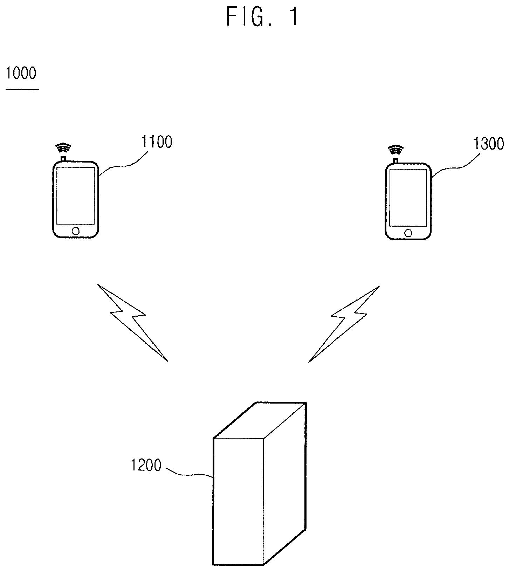

FIG. 1 is a diagram schematically illustrating a configuration of a non-face-to-face financial service system according to an embodiment of the invention.

In accordance with the non-face-to-face financial service system according to the embodiment of the invention, by using mobile non-face-to-face real name verification, a user can submit an account opening request form and register a digital signature (an electronic signature or an autographic signature) without visiting a financial branch. When account opening is approved, an access medium is delivered to the user and the account can be utilized after applicant identification. In this case, an electronic signature for financial transaction (Electronic signature A) and an electronic signature for receipt (Electronic signature B) are separately registered to alert a threat by only inputting a signature in the course of receiving the access medium.

Referring to FIG. 1, the non-face-to-face financial service system 1000 according to the embodiment includes an applicant terminal 1100, a financial service server 1200, and a deliverer terminal 1300.

The applicant terminal 1100 is an electronic terminal in which a mobile non-face-to-face financial service application provided by financial institutions (such as banks, Specialized Internet banks, security companies, and asset management companies) can be installed or which can access a mobile non-face-to-face financial service website which is managed by the financial institutions and may be one of a smartphone, a mobile communication terminal, a PDA, and a tablet PC on which an operating system capable of driving the mobile non-face-to-face financial service application or accessing a mobile website is mounted. When an applicant who wants to enjoy a mobile non-face-to-face financial service requests mobile non-face-to-face account opening, the applicant terminal 100 submits an application form including a real name certificate image, registers an electronic signature, and makes a video call.

The financial service server 1200 receives a request for mobile non-face-to-face account opening, stores a real name certificate image and an electronic signature, and approves issuance of an account by communicating with the applicant terminal 1100. In the course of delivering an access medium, the financial service server 1200 recognizes an electronic signature and transmits an approval number to permit use of the account when it is determined that the recognized electronic signature is the electronic signature for receipt. After the use of the account is permitted, the electronic signature for financial transaction is used for non-face-to-face financial transactions.

When the electronic signature input in the course of delivery of the access medium is not the electronic signature for receipt but the electronic signature for financial transaction, the financial service server 1200 can determine that a person receiving the access medium is in an emergency and can execute a predetermined procedure (such as a report to the police, a report to a financial institution, or suspension of a financial transaction).

The deliverer terminal 1300 is an electronic terminal in which an access medium delivery-relevant application can be installed and may be one of a smartphone, a mobile communication terminal, a PDA, and a tablet PC on which an operating system capable of driving the mobile non-face-to-face financial service application or accessing a mobile website is mounted. The deliverer terminal 1300 displays an image and a random number transmitted from the financial service server 1200, receives an electronic signature, and acknowledges delivery of an access medium.

Functions of the applicant terminal 1100, the financial service server 1200, and the deliverer terminal 1300 will be described below in detail with reference to the drawings.

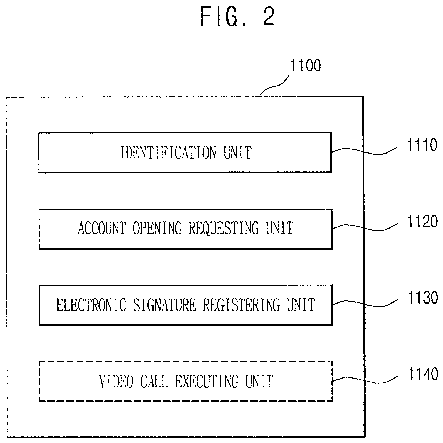

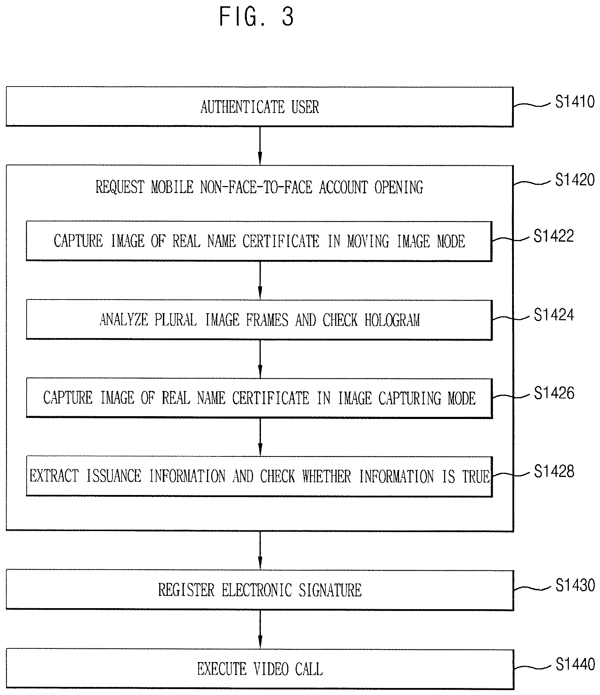

FIG. 2 is a block diagram illustrating a configuration of an applicant terminal which is included in the non-face-to-face financial service system. FIG. 3 is a flowchart illustrating a mobile non-face-to-face account opening method which is performed by the applicant terminal.

Referring to FIG. 2, the applicant terminal 1100 according to the embodiment includes an identification unit 1110, an account opening requesting unit 1120, an electronic signature registering unit 1130, and a video call executing unit 1140. Here, it is assumed that an applicant-dedicated application enabling enjoying of a financial service using mobile non-face-to-face real name verification is installed in the applicant terminal 1100, and each element of the applicant terminal 1100 may be one of functional modules embodied by the application.

When an applicant who wants to enjoy a financial service using mobile non-face-to-face real name verification performs first access for executing the dedicated application using the applicant terminal 1100, the identification unit 1110 can authenticate a user in cooperation with a communication service (Step S1410). The authentication can be performed by issuance of an authentication code to the communication service using a phone number and confirmation thereof.

The account opening requesting unit 1120 requests account opening using mobile non-face-to-face account real name verification (Step S1420).

The request for account opening is carried out by preparing and submitting an account opening request form. The account opening request form includes, for example, applicant information including a name, a resident registration number, an access medium receipt address, and a mobile number and a real name certificate image. The real name certificate includes an identification card for identifying an individual person such as a resident registration card, a driving license, or a passport

A process of recognizing a real name certificate image is as follows.

When the dedicated application is driven in the applicant terminal 1100, a real name certificate of the applicant is imaged using a camera disposed in the applicant terminal 1100.

First, the camera is driven in a moving image mode (Step S1422), and it is checked whether a hologram pattern of the real name certificate is true while guiding the applicant to rotate the real name certificate within a limited angle range in an imaging range or to rotate the camera within a limited angle range in a state with the real name certificate is placed on a plane using a terminal screen. Specifically, when the camera is in the moving image mode, the dedicated application acquires and analyzes a plurality of continuous image frames of the real name certificate, extracts a hologram pattern thereof, and determines whether the hologram pattern is true (Step S1424).

The hologram pattern is prepared such that a color thereof varies depending on a viewing angle. Accordingly, the hologram pattern can be extracted by sensing a change in color depending on various imaging angles in the moving image mode and analyzing the change in color using a predetermined image analysis algorithm. In general, a special reader is required for determine whether a hologram is true. However, in this embodiment, it is possible to satisfactorily determine whether the hologram is true using a general camera disposed in a smartphone.

Only when it is determined that the hologram pattern is true, the camera is switched to an image capturing mode, captures an image of the real name certificate, and acquires an account opening real name certificate image (Step S1426).

Issuance information (such as an issuance institution and an issuance date) is extracted by performing optical character recognition (OCR) on the captured real name certificate image, and the issuance information is registered in cooperation with an administrative network to determine whether the real name certificate is true (Step S1428).

When it is determined that the real name certificate is true, the captured real name certificate image is transmitted to the financial service server 1200.

The electronic signature registering unit 1130 receives an input of an electronic signature from the applicant via a touch screen of the applicant terminal 1100 (Step S1430).

The input electronic signature includes an electronic signature for financial transaction (Electronic signature A) to be described in a bankbook and an electronic signature for receipt (Electronic signature B).

Electronic signature A is a digital signature which is described in a bankbook which is an access medium and is used to carry out a financial transaction after the access medium is delivered. Electronic signature B is a digital signature which is used to receive the access medium and is a temporary electronic signature which is once used to receive the access medium.

Here, Electronic signature A may function as a special emergency code for alerting an emergency at the time of receiving the access medium. This will be described later in the process of delivering an access medium.

The electronic signature registering unit 1130 registers one or more signature attributes of rhythm (line flow), device inclination, acceleration, touch position, continuity, final image, pressure, and position (line position) as authentication reference data which is a reference value for later electronic signature comparison and authentication. Authentication reference data A for Electronic signature A and Authentication reference data B for Electronic signature B can be separately registered in the authentication reference data.

The authentication reference data registered in the electronic signature registering unit 1130 is transmitted to the financial service server 1200 and is stored in the financial service server 1200 until the applicant executes a first account transaction.

If necessary, the video call executing unit 1140 makes a video call with a terminal of a client center which is operated by a financial institution using a camera disposed in the applicant terminal 1100 (Step S1440). The real name certificate image transmitted to the financial service server 1200 and a face of the applicant can be visually checked by a staff of the financial institution in the course of the video call.

The terminal of the client center can capture and store a screen in the course of the video call and transmit the screen to the financial service server 200.

After the submission of an account opening request form, the registration of an electronic signature, and the video call are sequentially performed, the account opening requesting process using mobile non-face-to-face real name verification by the applicant terminal 1100 is completed.

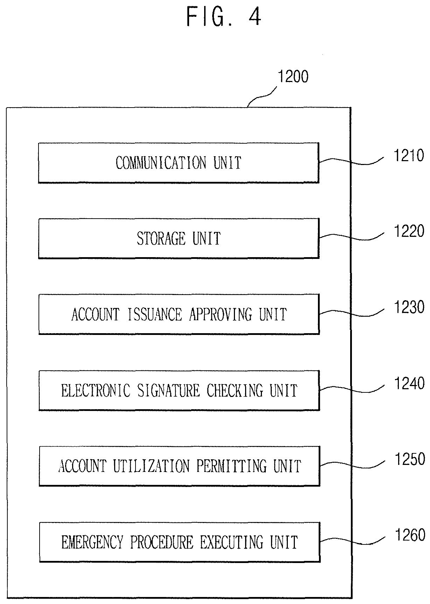

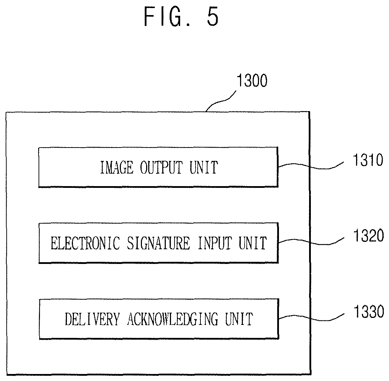

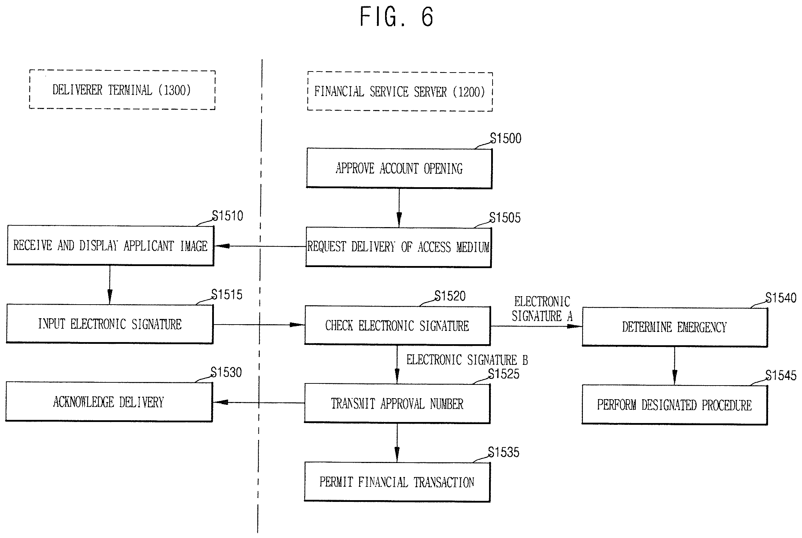

FIG. 4 is a block diagram illustrating a configuration of the financial service server which is included in the financial service system. FIG. 5 is a block diagram illustrating a configuration of the deliverer terminal which is included in the financial service system. FIG. 6 is a flowchart illustrating the account issuing and access medium delivering method which is performed in cooperation by the financial service server and the deliverer terminal.

Referring to FIG. 4, the financial service server 1200 according to the embodiment includes a communication unit 1210, a storage unit 1220, and an account issuance approving unit 1230, an electronic signature checking unit 1240, an account utilization permitting unit 1250, and an emergency procedure executing unit 1260.

The communication unit 1210 communicates with the applicant terminal 1100 and the deliverer terminal 1300 connected thereto via a network. An account opening request form (which includes applicant information), a real name certificate image, and authentication reference data for authentication of an electronic signature are received from the applicant terminal 1100, and video-call captured image is received from the terminal of the client center. An electronic signature and a delivery acknowledgement message are received from the deliverer terminal 1300, and the real name certificate image, the video-call captured image, and an approval number are transmitted to the deliverer terminal 1300.

The storage unit 1220 stores a variety of data received via the communication unit 1210.

When the account opening request form, the real name certificate image, and the authentication reference data for electronic signature comparison and authentication are received from the applicant terminal 1100, the account issuance approving unit 1230 determines that the mobile non-face-to-face real name verification is completed and approves opening of an account for the applicant corresponding to the applicant information included in the account opening request form (Step S1500). The criterion which is used to determine whether the non-face-to-face real name verification is completed may further include whether the video-call captured image is received from the terminal of the client center.

When the account opening is approved, an access medium (such as a bankbook, a credit card, or a check card) which can be utilized by the applicant is permitted to be delivered (Step S1505).

In the course of delivery of the access medium (DM), the financial service server 1200 operates in cooperation with the deliverer terminal 1300. Referring to FIG. 5, the deliverer terminal 1300 according to the embodiment includes an image output unit 1310, an electronic signature input unit 1320, and a delivery acknowledging unit 1330. Here, it is assumed that a deliverer-dedicated application for providing a financial service using mobile non-face-to-face real name verification is installed in the deliverer terminal 1300, and each element of the deliverer terminal 1300 may be one functional module embodied by the application.

Delivery of an access medium can be carried out, for example, by a staff of a credit information company as a deliverer. In this case, the deliverer terminal 1300 may be a terminal carried by the staff of the credit information company.

The image output unit 1310 receives at least one of the real name certificate image and the video-call captured image from the communication unit 1210 of the financial service server 1200 and outputs the received one to the screen of the deliverer terminal 1300 (Step S1510). The deliverer can visually check the applicant by comparison with the actual face of the applicant in the image output to the screen.

When the visual checking is completed, the electronic signature input unit 1320 receives an input of an acknowledgement signature from the applicant (Step S1515).

An electronic signature can be input in cooperation with GPS information. In order to allow the applicant to receive the access medium at only the address described in the account opening request form in delivery of the access medium, the electronic signature input unit 1320 can be activated to enable inputting of an electronic signature only when a position of the deliverer terminal 1300 indicated by the GPS information coincides with the address described in the request form. In this case, since the electronic signature cannot be input in a place other than the address and subsequent steps cannot be performed, it is possible to prevent a delivery error of the access medium.

Alternatively, GPS position information of the deliverer terminal 1300 may be transmitted together at the time of transmitting the electronic signature input on the electronic signature input unit 1320 to the financial service server 1200. In this case, financial service server 1200 may compare the GPS position with the address described in the account opening request form to verify the address. When the address verification fails, it is possible to prevent a delivery error of the access medium by prohibiting transmission of an approval number.

The acknowledgement signature is transmitted to the financial service server 1200, and it is then determined whether the acknowledgement signature is Electronic signature B (the electronic signature for receipt) (Step S1520).

When the electronic signature checking unit 1240 of the financial service server 1200 determines that the acknowledgement signature is Electronic signature B, the account utilization permitting unit 1250 transmits an approval number to the deliverer terminal 1300 (Step S1525).

When the approval number is received and automatically input, the delivery acknowledging unit 1330 of the deliverer terminal 1300 notifies that the access medium is completely delivered (Step S1530).

When an access medium delivery acknowledgement message is received, the account utilization permitting unit 1250 registers the access medium and permits financial transactions using the issued account (Step S1535).

On the other hand, when it is determined in Step S1520 that the acknowledgement signature is Electronic signature A (the electronic signature for financial transaction), an emergency is determined (Step S1540).

Accordingly, even when a threatener watches the electronic signature (Electronic signature A) described in the access medium (such as a bankbook) in a state in which the non-face-to-face account opening applicant is in a threatened situation, the threatener cannot recognize the difference. As a result, the applicant cannot be harmed on the spot.

Electronic signature A which is the same as described in a bankbook serves as a special emergency code for reporting an emergency in the course of receiving the access medium. That is, when Electronic signature A is input, it is determined that the applicant is in an emergency. In this case, the emergency procedure executing unit 1260 is activated to execute a predetermined emergency procedure (Step S1545). The input electronic signature cannot be authenticated as the acknowledgement signature, the position of the applicant can be understood on the basis of the GPS information of the deliverer terminal 1300 or the receipt address of the access medium, and an emergency message indicating an emergency along with the position information of the applicant can be transmitted to a predetermined manager terminal (such as a police terminal or a financial institution terminal).

In the above description, it is assumed that the deliverer terminal 1300 is provided with the electronic signature input unit 1320. This is only an example. In some cases, the applicant terminal 1100 may be provided with the electronic signature input unit, a dedicated application may be driven in the applicant terminal 1100 to display a screen for inputting an electronic signature on the terminal screen, and the acknowledgement signature may be input and transmitted to the financial service server 1200.

At this time, the GPS position information of the applicant terminal 1100 and/or terminal identification information (such as a MAC address) along with the acknowledgement signature may be transmitted. Accordingly, the financial service server 1200 may verify whether an action of putting an acknowledgement signature is normal such as whether the electronic signature is input at a normal address or whether the electronic signature is input to a normal terminal, as well as similarity of the acknowledgement signature.

A signature parallel processing technique for authentication of an electronic signature (an autographic signature) will be described below.

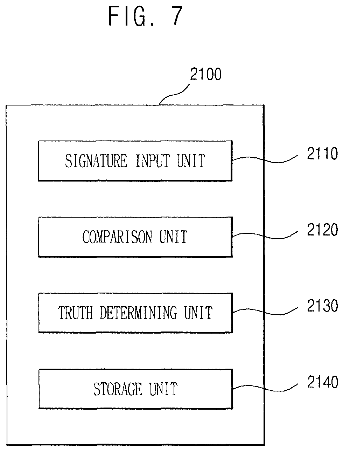

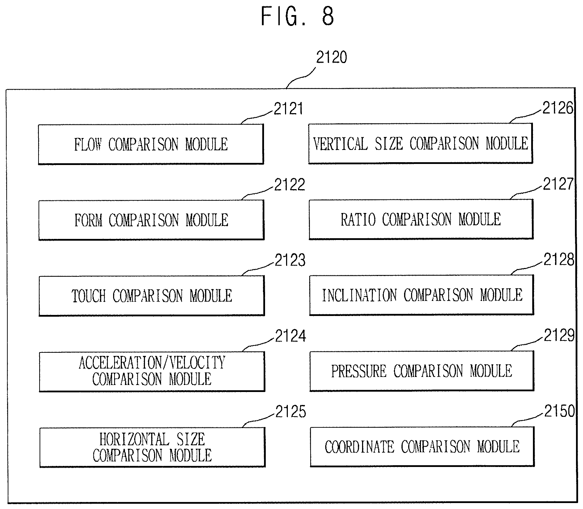

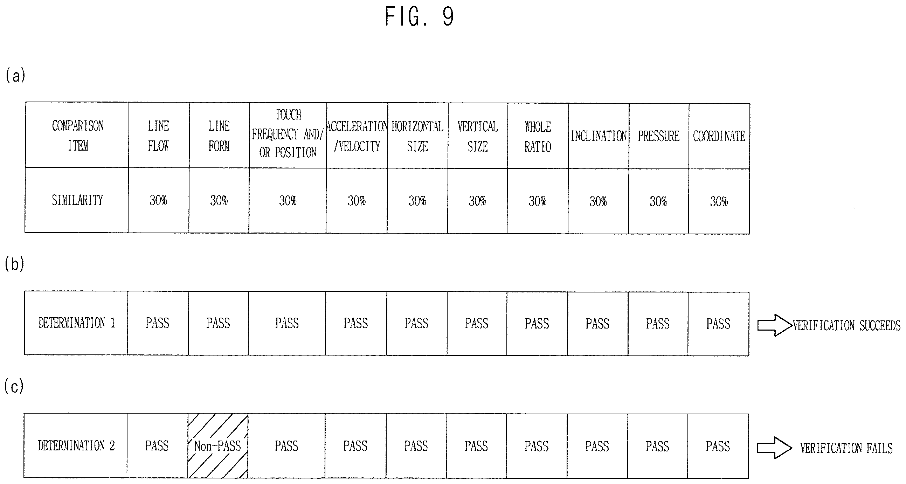

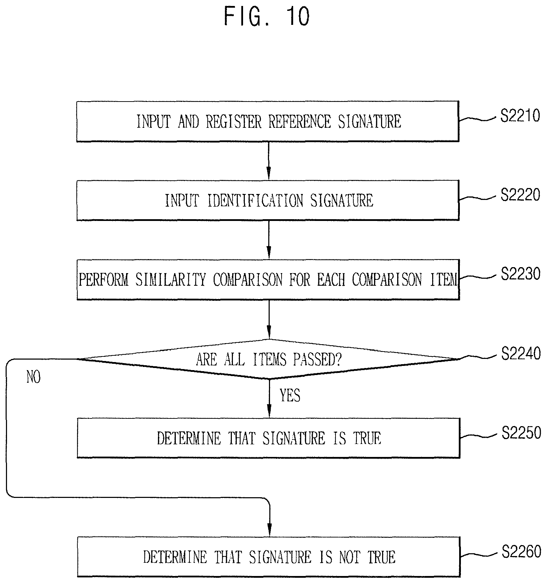

FIG. 7 is a diagram schematically illustrating a configuration of an identification device using signature parallel processing according to another embodiment of the invention. FIG. 8 is a diagram illustrating a configuration of comparison modules which are included in a comparison unit. FIG. 9 is a diagram illustrating an example of comparison items and determination results. FIG. 10 is a flowchart illustrating an identification method using the identification device according to the embodiment of the invention.

The identification device according to the embodiment of the invention is characterized in that when an electronic signature is input, while the input electronic signature is compared with a registered signature at a low level in terms of respective comparison items, a determination of a true signature is made only when a pass determination is made concerning all the comparison items.

The identification device 2100 according to the embodiment includes a signature input unit 2110, a comparison unit 2120, a truth determining unit 2130, and a storage unit 2140.

The signature input unit 2110 is an input unit configured to receive an input of a signature from a user. For example, the signature input unit 2110 may be a touch screen panel which is connected to a POS terminal of a store or a touch screen panel which is disposed in a smartphone. In the following description, it is assumed that the signature input unit 2110 is a touch screen panel which is disposed in a smartphone for the purpose of understanding of the invention and convenience of explanation.

The signature input unit 2110 stores signature-relevant information generated by a user's action of putting a signature in the storage unit 2140 in correlation with the signature. The signature-relevant information can include data about signature attributes such as line flow, line form, touch frequency and/or couth position, acceleration, signature size and ratio, inclination, touch pressure, and line thickness based on a motion of a touch tool (such as a finger or a stylus) in addition to the shape of the signature input from the user. That is, the storage unit 2140 stores a reference signature input via the signature input unit 2110 and signature-relevant information on the reference signature.

The signature input unit 2110 can first receive an input of a reference signature which is used for identification from a user (Step S2210). The reference signature which is first input to the identification device 2100 is stored in the storage unit 2140, and serves as a reference for comparison in similarity with a signature input for settlement, financial transactions, entrance, or the like by a user.

The signature input unit 2110 receives an input of an identification signature from the user with a predetermined purpose (such as settlement, financial transactions, or entrance) (Step S2220).

The comparison unit 2120 compares the identification signature input via the signature input unit 2110 with the reference signature stored in the storage unit 2140 (Step S2230).

The comparison unit 2120 performs individual independent similarity determination on various comparison items corresponding to the signature attributes, and may include one or more of a flow comparison module 2121, a form comparison module 2122, a touch comparison module 2123, an acceleration/velocity comparison module 2124, a horizontal size comparison module 2125, a vertical size comparison module 2126, a ratio comparison module 2127, an inclination comparison module 2128, a pressure comparison module 2129, and a coordinate comparison module 2150 as illustrated in FIG. 8.

The comparison unit 2120 may add comparison items with advancement in hardware and software for minimization of an error rate of the signature comparison.

The flow comparison module 2121 recognizes directivity of a motion of a touch tool as a line flow included in the signature when the signature is input, and performs comparison in a line flow similarity between the reference signature and the identification signature.

The form comparison module 2122 divides the input signature into strokes, recognizes a moving distance of a stroke at an end point of the stroke as a line form, and performs comparison in form between the reference signature and the identification signature.

The touch comparison module 2123 can perform comparison in similarity of a touch frequency and/or a touch position of the touch tool with the screen of the signature input unit 2110 in inputting the signature. For example, the touch frequency (or a detachment frequency from the screen) and the touch position (coordinate) of the touch tool in inputting the signature can be included as touch information.

The acceleration/velocity comparison module 2124 determines an instantaneous velocity of the touch tool in a predetermined time section to be velocity information (acceleration or velocity) in inputting the signature and performs comparison in similarity of the velocity information between the reference signature and the identification signature.

The horizontal size comparison module 2125 performs comparison in similarity of a horizontal size in the whole image between the reference signature and the identification signature.

The vertical size comparison module 2126 performs comparison in similarity of a vertical size in the whole image between the reference signature and the identification signature.

The ratio comparison module 2127 performs comparison in similarity of a ratio of the horizontal size and the vertical size of the whole image between the reference signature and the identification signature.

The inclination comparison module 2128 determines an angle at which the signature input unit 2110 is inclined in inputting the signature as a device inclination and performs comparison in inclination between the reference signature and the identification signature.

The pressure comparison module 2129 compares the identification signature with the reference signature in a user's touch pressure which is measured in inputting the signature to the signature input unit 2110. In this case, the touch pressure may be replaced with a line thickness of the signature.

The coordinate comparison module 2150 performs comparison in an error value of position information of the coordinates based on the line flow in inputting the signature.

The comparison modules makes a determination of pass or non-pass depending on whether the result from each comparison item is beyond the similarity level preset for the comparison item or not.

The similarity levels may be set at the same level for the respective comparison modules, but may be individually set to be different from each other. For example, in FIG. 9(a), the same similarity level of 30% is set for all the comparison items, but this is only an example and the similarity levels can be changed together or independently if necessary. For example, when it is intended to enhance reliability of identification, the similarity levels of the individual comparison items can be set to be higher.

The comparison modules operate independently and a comparison result of a certain comparison module does not have an influence to another comparison module.

The truth determining unit 2130 determines whether the signature is true on the basis of the similarity determination result which is acquired from the comparison unit 2120 (Step S2240). The user inputting the signature can be identified on the basis of the determination result from the truth determining unit 2130.

The similarity determination results of the comparison items are used in parallel for the truth determining unit 2130 to determine whether the signature is true. For example, when most comparison modules output high similarity levels and one comparison module outputs a similarity level lower than a reference, this result may be evaluated on average to meet the similarity requirement. According to the present embodiment, however, they are determined to be different from each other on the basis of the parallel processing technique.

For example, as illustrated in FIG. 9(b), when a pass determination is made on all the comparison items, the truth determining unit 2130 determines that the identification signature is the same as the reference signature and determine that the identification signature is true (Step S2250). In this case, the user inputting the signature is authenticated.

On the other hand, as illustrated in FIG. 9(c), when a non-pass determination is made on a certain comparison item (the item of "line form" in FIG. 9(b)), the truth determining unit 2130 determines that the identification signature is different from the reference signature and is not a signature by the true user (Step S2260). In this case, the user inputting the signature is not authenticated.

The truth determining unit 2130 may selectively activate some comparison modules included in the comparison unit 2120 in determining whether the signature is true.

In this case, only when a pass determination is made on all the comparison items corresponding to the selected comparison modules, it is determined that the signature is true. When there is any one item on which non-pass determination is made, the signature is determined not to be true and the signature verification fails.

According to the embodiment, the similarities for all the comparison items are not easily satisfied by a person imitating a user's signature, which provides high reliability.

Since the similarity level as a criterion for each comparison item needs not to be high, there are advantages such as an improvement of computing speed and a lightening of the processing unit.

While the invention has been described above with reference to exemplary embodiments, it will be understood by those skilled in the art that the invention can be modified and changed in various forms without departing from the concept and scope of the invention described in the appended claims.

## Claims

1. A non-face-to-face financial service system comprising:
an applicant terminal for receiving an account opening request form, acquiring a real name certificate image, registering an electronic signature to be used in a non-face-to-face financial transaction as an electronic signature for financial transaction, and registering an electronic signature to be used in receiving an access medium as an electronic signature for receipt;
a deliverer terminal for outputting the real name certificate image and receiving an acknowledgement signature for the access medium; and
a financial service server for, when the account opening request form, the real name certificate image, the electronic signature for financial transaction, and the electronic signature for receipt are received from the applicant terminal, approving issuance of an account, transmitting the real name certificate image to the deliverer terminal, and executing a predetermined measure depending on a type of the acknowledgement signature input on the deliverer terminal.

2. The non-face-to-face financial service system according to claim 1, wherein the financial service server includes:
a communication unit configured to communicate with the applicant terminal and the deliverer terminal;
an account issuance approving unit configured, when the account opening request form, the real name certificate image, the electronic signature for financial transaction, and the electronic signature for receipt are received from the applicant terminal, to approve issuance of an account and allow delivery of the access medium;
an electronic signature confirming unit configured to confirm the acknowledgement signature;
an account utilization permitting unit configured to, if the acknowledgement signature is the electronic signature for receipt, permit utilization of the issued account for a future non-face-to-face financial transaction using said electronic signature for financial transaction; and
an emergency procedure executing unit configured to, if the acknowledgement signature is the electronic signature for financial transaction, execute a predetermined emergency procedure.

3. The non-face-to-face financial service system according to claim 2, wherein the emergency procedure executing unit is configured to consider a position of the deliverer terminal indicated by GPS information or a receipt address of the access medium as a position of the applicant and to transmit an emergency message along with the position of the applicant to a predetermined manager terminal.

4. An identification device comprising:
a signature input unit configured to receive an input of an identification signature via a touch screen panel;
a storage unit configured to store a reference signature;
a comparison unit configured to determine a similarity between the identification signature and the reference signature with regard to respective ones of a plurality of predetermined comparison items; and
a truth determining unit configured to determine that the identification signature is the same as the reference signature only when the comparison unit makes a pass determination with regard to all of the plurality of comparison items.

5. The identification device according to claim 4, wherein the comparison unit includes one or more of:
a flow comparison module configured to compare a flow of a line included in a signature with directivity of a motion of a touch tool at the time of inputting the signature;
a form comparison module configured to segment the input signature into strokes and to perform comparison of a moving distance of a stroke at an end point of the stroke;
a touch comparison module configured to perform comparison in one or more of a touch frequency and a touch position of the touch tool with the touch screen panel at the time of inputting the signature;
an acceleration/velocity comparison module configured to perform comparison in an instantaneous velocity of the touch tool in a predetermined time section at the time of inputting the signature;
a horizontal size comparison module configured to perform comparison in a horizontal size of a whole image between the reference signature and the identification signature;
a vertical size comparison module configured to perform comparison in a vertical size of a whole image between the reference signature and the identification signature;
a ratio comparison module configured to perform comparison in a ratio between a horizontal size and a vertical size of a whole image between the reference signature and the identification signature;
a pressure comparison module configured to perform comparison in a user's touch pressure which is measured while the signature is input to the signature input unit; and
a coordinate comparison module configured to perform comparison in a position information error of coordinates based on the flow of a line.

6. The identification device according to claim 4,
wherein the comparison unit is configured to make a pass or a non-pass determination depending on whether or not the result from each comparison item is beyond a predetermined similarity level, and
wherein the truth determining unit is configured to, if there is any one non-pass determination, determine that the signature authentication fails.
